# EUROPÄISCHE PATENTSCHRIFT

(11) **EP 2 586 080 B1**
(45) Veröffentlichungstag und Bekanntmachung des Hinweises auf die Patenterteilung: **12.07.2017**
(21) Anmeldenummer: 11718416.8
(22) Anmeldetag: 10.05.2011
(51) Int. Cl.: H01M 2/10, H01M 2/12, H01M 10/42, H01M 2/36

(54) **BATTERIE MIT EINEM FORMKÖRPER AUS EINEM PORÖSEN, FEUCHTIGKEIT AUFNEHMENDEN WERKSTOFF ZUM FEUCHTIGKEITSTRANSPORT AUS DEM BATTERIEGEHÄUSE**
BATTERY COMPRISING A MOULDED BODY MADE OF A POROUS, MOISTURE-ABSORBING MATERIAL FOR TRANSPORTING MOISTURE OUT OF THE BATTERY HOUSING
BATTERIE PRÉSENTANT UN CORPS MOULÉ CONSTITUÉ D'UN MATÉRIAU POREUX ABSORBANT L'HUMIDITÉ, POUR ÉVACUER L'HUMIDITÉ DU BOÎTIER DE BATTERIE

(30) Priorität: 22.06.2010 DE 102010030367
(43) Veröffentlichungstag der Anmeldung: 01.05.2013
(73) Patentinhaber: Samsung SDI Co., Ltd., Gyeonggi-do (KR); Robert Bosch GmbH, 70442 Stuttgart (DE)
(72) Erfinder: Gless, Michael, 70437 Stuttgart-Zazenhausen (DE); ZIMMERMANN, Ulrich, 74394 Hessigheim (DE)
(74) Vertreter: Bee, Joachim
(86) Internationale Anmeldenummer: PCT/EP2011/057522
(87) Internationale Veröffentlichungsnummer: WO 2011/160888

(56) Entgegenhaltungen:
- DE-A1-102008 034 698
- DE-A1-102009 032 463
- JP-A- 2009 259 785
- JP-A- 2010 129 392
- US-A- 2 364 144

## Beschreibung

Die vorliegende Erfindung betrifft eine Batterie, insbesondere eine Lithium-Ionen-Batterie, mit einem Formkörper aus einem porösen, Feuchtigkeit aufnehmenden Werkstoff zum Feuchtigkeitstransport aus dem Batteriegehäuse sowie ein Kraftfahrzeug mit einer solchen Batterie.

### Stand der Technik

Bei Geräten, die über ein Gehäuse mit einem eingeschlossenen Luftvolumen verfügen, welches Temperaturveränderungen und damit auch Volumenveränderungen ausgesetzt ist, ist üblicherweise ein Druckausgleichselement vorgesehen. Ein solches Druckausgleichselement kann beispielsweise als mikroporöse Membran ausgebildet sein. Eine solche Membran ist üblicherweise luftdurchlässig.

Ein Problem solcher mikroporöser Membranen ist, dass diese meist undurchlässig sind für flüssiges Wasser, nicht aber für Wasserdampf. Bei einer Atmosphäre mit hoher Luftfeuchtigkeit kann also feuchte Luft durch diese mikroporösen Membranen in das Gehäuseinnere gelangen. Im Inneren des Gehäuses kann es dazu kommen, dass die Feuchtigkeit aus der Luft zu flüssigem Wasser kondensiert. Solches Kondensat kann dann dazu führen, dass das Gerät beeinträchtigt wird und gegebenenfalls sogar ausfällt.

Es wurde bereits versucht, solches Kondensat durch entsprechende Vorrichtungen innerhalb des Gehäuses aufzufangen und an geeigneten, unkritischen Stellen im Gehäuse zu sammeln. Bei solchen Lösungen verbleibt das gesammelte Wasser allerdings innerhalb des Gehäuses, so dass sich im Laufe der Zeit sehr große Mengen Kondensat ansammeln können. Wird das Gerät einer Temperaturerhöhung ausgesetzt, so kann das gesammelte Kondensat gegebenenfalls teilweise wieder verdunsten und die Luftfeuchtigkeit im Gehäuseinneren erhöhen. Fällt die Temperatur dann wieder, besteht erneut die Gefahr, dass das Wasser an kritischen Stellen im Gehäuse kondensiert und Schäden anrichtet.

Aus der DE 10 2007 011 026 A1 ist eine Batterie bekannt, bei der keine mikroporöse Membran als Druckausgleichselement vorgesehen ist, sondern der Druckausgleich über eine Öffnung und einen damit verbundenen Entlüftungsschlauch erfolgt. Bei dieser Batterie befindet sich innerhalb des Gehäuses eine Kühlfalle zum Sammeln von Wasser. Das gesammelte Kondensat wird dann über eine Öffnung und den Entlüftungsschlauch aus dem Gehäuseinneren an die Umgebung abgegeben. Ein Problem dieser Batteriekonstruktion ist, dass die Öffnung und der Entlüftungsschlauch flüssigkeitsdurchlässig ausgestaltet sein müssen, damit das kondensierte Wasser aus der Kühlfalle an die Umgebung abgeführt werden kann. Dadurch kann durch diese Öffnung und den Entlüftungsschlauch auch Wasser in das Innere der Batterie gelangen, insbesondere wenn die Batterie und damit die Kühlfalle nicht aktiv in Betrieb sind. Damit weist diese Batteriekonstruktion zwar eine Möglichkeit auf, Wasser aus dem Inneren der Batterie heraus zu transportieren, allerdings geht damit eine erhöhte Gefahr der Aufnahme von Wasser aus der Umgebung einher.

### Offenbarung der Erfindung

Erfindungsgemäß wird eine Batterie zur Verfügung gestellt, mit einem Gehäuse, in dem mindestens eine Batteriezelle und eine Vorrichtung zur Trocknung von im Gehäuseinnenraum befindlicher Luft angeordnet sind, dadurch gekennzeichnet, dass die Batterie einen Formkörper aus einem porösen, Feuchtigkeit aufnehmenden Werkstoff aufweist, der derart angebracht ist, dass er sich sowohl in den Gehäuseinnenraum als auch in den Außenraum des Gehäuses erstreckt und diese feuchtigkeitsleitend miteinander verbindet, wobei der im Gehäuseinnenraum befindliche Teil des Formkörpers derart mit der Vorrichtung zur Trocknung der im Gehäuseinnenraum befindlichen Luft verbunden ist, dass gesammeltes Wasser aus der Vorrichtung zur Lufttrocknung an den Formkörper übertragbar ist.

Die vorliegende Erfindung beruht darauf, dass ein Formkörper aus einem porösen, Feuchtigkeit aufnehmenden Werkstoff derart in das Batteriegehäuse integriert vorliegt, dass dieser den Innen- und Außenraum des Gehäuses verbindet. Dieser Formkörper ist in der Lage, Feuchtigkeit aus dem Inneren des Batteriegehäuses aufzunehmen und diese mittels Kapillarkräften über sein gesamtes Volumen zu verteilen. Der außerhalb des Gehäuses liegende Teil des Formkörpers kann diese Feuchte dann wieder an die Umgebungsluft abgeben. Die erfindungsgemäße Batterie hat den Vorteil, dass Feuchtigkeit aus dem Gehäuseinneren effektiv entfernt werden kann, während gleichzeitig der Druckausgleich über eine mikroporöse Membran ermöglicht bleibt.

Die erfindungsgemäße Batterie umfasst eine oder mehrere Batteriezellen, die geeignet miteinander verschaltet sein können. Unter dem Begriff "Batterie" werden hier elektrochemische Energiespeicher verstanden, insbesondere Energiespeicher aller gebräuchlichen Akkumulatortechnologien. Es können Batterien oder Akkumulatoren vom Typ Pb - Bleiakku, NiCd - Nickel-Cadmium-Akku, NiH2 - Nickel-Wasserstoff-Akkumulator, NiMH - Nickel-Metallhydrid-Akkumulator, Li-Ion - Lithium-Ionen-Akku, LiPo - Lithium-Polymer-Akku, LiFe - Lithium-Metall-Akku, Li-Mn - Lithium-Mangan-Akku, LiFePO₄ - Lithium-Eisen-Phosphat-Akkumulator, LiTi - Lithium-Titanat-Akku, RAM - Rechargeable Alkaline Manganese, Ni-Fe - Nickel-Eisen-Akku, Na/NiCI - Natrium-Nickelchlorid-Hochtemperaturbatterie, SCiB - Super Charge Ion Battery, Silber-Zink-Akku, Silikon-Akku, Vanadium-Redox-Akkumulator und/oder Zink-Brom-Akku verwendet werden. Insbesondere können Batterien vom Typ der Lithium-Ionen-, Blei/Säure-, Nickel-Cadmium-, Nickel-Metallhydrid- und/oder Natrium/Natriumnickelchlorid-Batterie eingesetzt werden. Besonders bevorzugt werden Batterien vom Typ der Lithium-Ionen-Batterie verwendet.

Die erfindungsgemäße Batterie kann dabei sowohl einzelne Zellen, als auch Module aus mehreren Zellen, als auch komplexere Architekturen umfassend mehrere Zellen und/oder Module aufweisen.

Bevorzugt sind die Zellen, Module, Systeme oder Akkumulatoren vom Typ Li-Ionen (Lithium-Ionen-) oder LiPo (als Lithium-Polymer oder Lithium-Ionen-Polymer bezeichnet). Die folgenden Begriffe reflektieren Beispiele für Aktivmaterialien, die in diesen Lithium-Ionen-Zellen zum Einsatz kommen: Li₂Mn₂O₄ (LMO) als Lithiummanganspinell bezeichnet; LiFePO₄ (LFP) - Lithium-Eisen-Phosphat, Li₄Ti₅O₁₂ (LiTiO) - Lithium-Titanat.

Die erfindungsgemäße Batterie weist ein Gehäuse auf, in dem mindestens eine Batteriezelle und eine Vorrichtung zur Trocknung der im Gehäuseinneren befindlichen Luft angeordnet sind. Dabei kann die Batterie ein einziges oder mehrere Gehäuse aufweisen, die jeweils eine oder mehrere Batteriezellen umfassen. Bevorzugt weist die Batterie ein gemeinsames Gehäuse auf, in dem alle Zellen, Systeme oder Module der Batterie angeordnet sind. Unter dem Begriff "Gehäuse" ist dabei eine Vorrichtung zu verstehen, die einen Innenraum aufweist, der geeignet ist, eine oder mehrere Batteriezellen aufzunehmen. Bevorzugt grenzt das Gehäuse die enthaltenen Batteriezellen gegenüber der Umgebung nach allen Richtungen hin vollständig ab, so dass im Gehäuseinneren ein im Wesentlichen abgeschlossener Raum entsteht. Das Gehäuse kann verschließbare Zugänge, wie zum Beispiel mit Deckeln verschließbare Öffnungen aufweisen. Für die Zwecke der vorliegenden Erfindung kann unter einem Gehäuse nicht der unmittelbare Zellmantel verstanden werden, der die elektrochemischen Bestandteile einer einzelnen Zelle unmittelbar von der Umwelt trennt. Bevorzugt kann das Gehäuse aus einem Material gefertigt sein oder ein Material aufweisen, welches ein Metall, ein Metallblech oder eine Keramik umfasst oder daraus besteht. Besonders bevorzugt kann das Gehäuse aus einem Material gefertigt sein, welches Aluminium aufweist oder daraus besteht.

In der erfindungsgemäßen Batterie ist im Gehäuse eine Vorrichtung zur Trocknung der im Gehäuseinneren befindlichen Luft angeordnet. Diese Vorrichtung zur Trocknung dient dazu, Feuchtigkeit aus der im Gehäuseinneren befindlichen Luft zu entfernen und an einem Ort im Gehäuseinneren zu sammeln. Dadurch wird sichergestellt, dass Feuchtigkeit aus der im Gehäuseinneren befindlichen Luft nicht an kritischen Bauteilen oder Bestandteilen der Batterie kondensiert und dort gegebenenfalls zu Beeinträchtigungen oder Schäden führt. Geeignete Vorrichtungen zur Trocknung sind im Stand der Technik beschrieben und dem Fachmann bekannt. Bevorzugt kommen Vorrichtungen zum Einsatz, die die im Gehäuseinneren befindliche Luft mittels Kondensationstrocknung trocknen. Eine geeignete Vorrichtung zur Kondensationstrocknung ist beispielsweise eine Kühlfalle. Eine solche Kühlfalle ist zum Beispiel in DE 10 2007 011 026 A1 offenbart.

Die erfindungsgemäße Batterie zeichnet sich dadurch aus, dass die Batterie einen Formkörper aus einem porösen, Feuchtigkeit aufnehmenden Werkstoff aufweist, der derart angebracht ist, dass er sich sowohl in den Innen- als auch in den Außenraum des Gehäuses erstreckt und dadurch den Batterieinnenraum feuchtigkeitsleitend mit dem Außenraum der Batterie verbindet. Dabei ist der im Innenraum des Gehäuses befindliche Teil des Formkörpers derart mit der Vorrichtung zur Trocknung der im Gehäuseinneren befindlichen Luft verbunden, so dass gesammeltes Wasser aus der Vorrichtung zur Lufttrocknung an den Formkörper übermittelbar und über den Formkörper aus dem Gehäuseinneren an den Außenraum der Batterie weiterleitbar ist. Dabei ist der Formkörper bevorzugt derart ausgebildet, dass vom Formkörper aufgenommenes Wasser sich im Wesentlichen über das gesamte Volumen des Formkörpers verteilt. Diese Verteilung über im Wesentlichen das gesamte Volumen des Formkörpers kann beispielsweise dadurch erreicht werden, dass der Formkörper an einem Ende aufgenommenes Wasser mittels Kapillarkräften über den Formkörper verteilt. Dazu kann der Formkörper bevorzugt einen porösen, Feuchtigkeit aufnehmenden Werkstoff aufweisen oder daraus bestehen, der für Wasser eine Kapillaraszension zeigt. Für die Zwecke der vorliegenden Erfindung wird unter einem Formkörper ein Körper verstanden, der neben einer Breite und einer Höhe eine Länge (oder Tiefe) aufweist, die dazu führt, dass sich der Formkörper sowohl in den Innen- als auch in den Außenraum des Gehäuses der erfindungsgemäßen Batterie erstreckt und nicht nur an diesen angrenzt. Dabei kann eine Membran nicht als ein Formkörper im Sinne der vorliegenden Erfindung verstanden werden.

Um einen Wassertransport im Wesentlichen mittels Kapillareffekten über die gesamte Länge des Formkörpers vom im Gehäuseinneren liegenden Ende zum im Außenbereich des Gehäuses liegenden Ende des Formkörpers zu erlauben, kann der Formkörper einen porösen, Feuchtigkeit aufnehmenden Werkstoff enthalten oder daraus bestehen, der Kapillaren aufweist, wobei die Kapillaren bevorzugt einen vorher festgelegten mittleren Radius aufweisen. Insbesondere kann die erfindungsgemäße Batterie einen Formkörper aufweisen, der einen porösen, Feuchtigkeit aufnehmenden Werkstoff aufweist oder daraus besteht, dessen Kapillaren einen mittleren Radius aufweisen, der einen Wassertransport mittels Kapillaraszension vom im Gehäuseinneren liegenden Ende des Formkörpers zum außerhalb des Gehäuses liegenden Ende des Formkörpers gestattet.

Der Formkörper besteht aus einem porösen, Feuchtigkeit aufnehmenden Werkstoff. Bevorzugt umfassen geeignete poröse, Feuchtigkeit aufnehmende Werkstoffe Materialien oder Materialienverbünde (Verbundwerkstoffe), die einen Faserstoff, Holz, Kreide, Papier, ein Polymer oder ein Polymergemisch, Glas und/oder einen Schwamm umfassen oder daraus bestehen.

In einer bevorzugten Ausführungsform weist die erfindungsgemäße Batterie an dem außerhalb des Gehäuses liegenden Ende des Formkörpers Mittel auf, die dazu geeignet sind, den Feuchtigkeitstransport über den Formkörper aus dem Gehäuseinneren in den Außenraum zu befördern. Beispielsweise kann der Formkörper auf der außerhalb des Gehäuses liegenden Seite eine Vorrichtung aufweisen, die zum Entzug von Feuchtigkeit aus dem Formkörper geeignet ist. Dadurch, dass diese Vorrichtung lediglich auf dem außerhalb des Gehäuses gelegenen Ende des Formkörpers angebracht ist, wird die an diesem Ende enthaltene Feuchtigkeit aus dem Formkörper bevorzugt entfernt. Dadurch entsteht eine Sogwirkung über das Volumen des Formkörpers, die dazu führt, dass Feuchtigkeit vom im Gehäuseinneren liegenden Ende des Formkörpers gerichtet an das außerhalb des Gehäuses liegende Ende des Formkörpers transportiert wird. In einer bevorzugten Ausführungsform kann die Vorrichtung zum Entzug von Feuchtigkeit als Heizelement ausgebildet sein, welches geeignet ist, dem außerhalb des Gehäuses gelegenen Teil des Formkörpers mittels Temperaturänderung Feuchtigkeit zu entziehen.

Die Vorrichtung zum Entzug von Feuchtigkeit aus dem Formkörper kann durch das Auslösen oder während eines Ladevorgangs der Batterie aktivierbar ausgestaltet sein. Dies ist besonders vorteilhaft, da es dadurch ermöglicht wird, den Betrieb dieser Vorrichtung nicht unmittelbar zu Lasten des Ladezustandes der erfindungsgemäßen Batterie erfolgen zu lassen.

Bei dem Formkörper handelt es sich im Wesentlichen um eine Vorrichtung zum passiven Transport von Feuchtigkeit, insbesondere Wasser oder Kondenswasser, aus dem Gehäuseinneren der erfindungsgemäßen Batterie heraus und dessen Abgabe an die Umwelt. Grundsätzlich erfolgt dieser Transport in Richtung eines Feuchtigkeitsgefälles und kann damit unter den entsprechenden Bedingungen auch in umgekehrter Richtung in das Gehäuseinnere hinein erfolgen. Dies erscheint zwar unter Normalbedingungen sehr unwahrscheinlich, da der Formkörper mit seinem im Gehäuseinneren liegenden Ende mit dem gesammelten Wasser der Vorrichtung zur Trocknung der im Gehäuseinneren befindlichen Luft in Kontakt steht, so dass die Wasserkonzentration an diesem Ende in der Regel immer höher ist als die Wasserkonzentration am außerhalb des Gehäuses gelegenen Ende des Formkörpers. Allerdings sind Situationen denkbar, in denen das außerhalb des Gehäuses gelegene Ende des Formkörpers in Kontakt mit flüssigem Wasser kommen kann und die Gefahr besteht, dass dadurch eine Umkehr des Konzentrationsgefälles bewirkt werden könnte. Um dieser Gefahr zu begegnen, kann die erfindungsgemäße Batterie auf der Außenseite des Gehäuses Mittel aufweisen, die dazu führen, dass der außerhalb des Gehäuses liegende Teil des Formkörpers vor direktem Kontakt mit flüssigem Wasser geschützt ist, während ein Austausch von Wasserdampf zwischen dem Formkörper und der Umgebungsluft gewährleistet ist. Solch ein Schutz vor direktem Kontakt mit flüssigem Wasser kann beispielsweise durch eine mechanische Abdeckung erfolgen. Der außerhalb des Gehäuses liegende Teil des Formkörpers kann beispielsweise über eine mikroporöse Membran mit der Umgebungsluft in Kontakt stehen. Diese mikroporöse Membran zeichnet sich dabei dadurch aus, dass diese im Wesentlichen impermeabel für flüssiges Wasser ist, allerdings durchlässig ist für Wasserdampf. Geeignete mikroporöse Membranen können beispielsweise Polytetrafluoroethylene enthalten oder daraus bestehen.

Die vorliegende Erfindung bezieht sich auch auf Kraftfahrzeuge, die eine erfindungsgemäße Batterie umfassen. Dabei sind unter dem Begriff "Kraftfahrzeug" alle angetriebenen Fahrzeuge zu verstehen, die einen elektrochemischen Energiespeicher aufweisen, unabhängig davon welchen Antrieb diese Kraftfahrzeuge aufweisen. Insbesondere umfasst der Begriff "Kraftfahrzeug" elektrische Hybridfahrzeuge (HEV), Plug-In-Hybridfahrzeuge (PHEV), Elektrofahrzeuge (EV), Brennstoffzellenfahrzeuge, sowie alle Fahrzeuge, die einen elektrochemischen Energiespeicher für die elektrische Energieversorgung und/oder für die mindestens teilweise Versorgung eines Antriebsstranges einsetzen.

### Zeichnungen

Ausführungsbeispiele der Erfindung werden anhand der nachfolgenden Zeichnung und der dazugehörigen Beschreibung näher erläutert. Es zeigt:

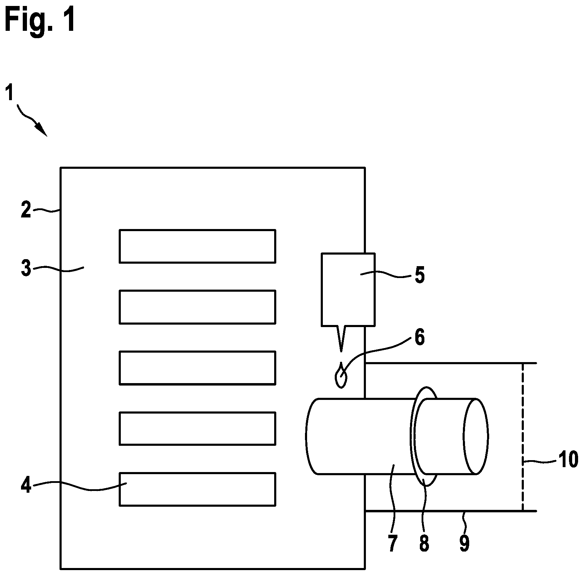

Figur 1 eine schematische Darstellung einer ersten Ausführungsform der erfindungsgemäßen Batterie.

### Ausführungsformen der Erfindung

In der Figur 1 ist eine schematische Darstellung einer Ausführungsform einer erfindungsgemäßen Batterie gezeigt. Die erfindungsgemäße Batterie 1 umfasst ein Gehäuse 2, welches einen Gehäuseinnenraum 3 derart umschließt, dass im Gehäuseinnenraum 3 ein im Wesentlichen abgeschlossener Luftraum entsteht. Im Gehäuseinnenraum 3 sind eine oder mehrere Batteriezellen 4 angeordnet und eine Vorrichtung 5 zur Trocknung von im Gehäuseinnenraum 3 befindlicher Luft. Die Vorrichtung 5 kann dabei insbesondere als Kühlfalle ausgebildet sein. Des Weiteren weist die Batterie 1 einen Formkörper 7 auf, der aus einem porösen, Feuchtigkeit aufnehmenden Werkstoff gebildet ist. Der Formkörper 7 ist derart angeordnet, dass sich der Formkörper 7 sowohl in den Gehäuseinnenraum 3 als auch in den Außenraum des Gehäuses 2 erstreckt. Der Formkörper 7 verbindet somit die Atmosphäre des Gehäuseinnenraumes 3 mit der Atmosphäre des Außenraumes des Gehäuses 2 in einer Art und Weise, die einen Flüssigkeitstransport zwischen den beiden Atmosphären über den Formkörper 7 erlaubt. Der Formkörper 7 ist derart im Gehäuse 2 positioniert und mit der Vorrichtung 5 verbunden, dass eine Übertragung von gesammeltem Wasser 6 aus der Vorrichtung 5 auf den im Gehäuseinnenraum 3 befindlichen Teil des Formkörpers 7 möglich ist. Um einen möglichst effektiven Transport von gesammeltem Wasser 6 aus dem Gehäuseinnenraum 3 über den Formkörper 7 in den Außenraum des Gehäuses 2 zu erlauben, ist an dem außerhalb des Gehäuses 2 liegenden Teil des Formkörpers 7 ein Heizelement 8 vorgesehen. Das Heizelement 8 dient dabei als Vorrichtung zum Entzug von Feuchtigkeit aus dem Formkörper 7. Um einen direkten Kontakt des außerhalb des Gehäuses 2 liegenden Teiles des Formkörpers 7 mit flüssigen Wasser zu vermeiden, weist die erfindungsgemäße Batterie eine mechanische Abdeckung 9 auf, in die eine mikroporöse Membran 10 eingelassen ist. Die mikroporöse Membran 10 und die mechanische Abdeckung 9 sind dabei derart ausgeführt, dass diese undurchlässig sind für flüssiges Wasser. Die mikroporöse Membran 10 zeichnet sich darüber hinaus dadurch aus, dass diese zwar undurchlässig für flüssiges Wasser ist, allerdings permeabel für Wasserdampf ist, so dass vom außerhalb des Gehäuses 2 liegenden Teil des Formkörpers 7 abgegebenes Wasser durch die mikroporöse Membran 10 an die Umgebung der Batterie 1 abführbar ist.

## Patentansprüche

1. Batterie mit einem Gehäuse, in dem mindestens eine Batteriezelle und eine Vorrichtung zur Trocknung von im Gehäuseinnenraum befindlicher Luft angeordnet sind, **dadurch gekennzeichnet, dass** die Batterie (1) einen Formkörper (7) aus einem porösen, Feuchtigkeit aufnehmenden Werkstoff aufweist, der derart angebracht ist, dass er sich sowohl in den Gehäuseinnenraum (3) als auch in den Außenraum des Gehäuses (2) erstreckt und diese feuchtigkeitsleitend miteinander verbindet, wobei der im Gehäuseinnenraum (3) befindliche Teil des Formkörpers (7) derart mit der Vorrichtung (5) zur Trocknung der im Gehäuseinnenraum (3) befindlichen Luft verbunden ist, dass gesammeltes Wasser (6) aus der Vorrichtung (5) zur Lufttrocknung an den Formkörper (7) übertragbar ist.

2. Batterie nach Anspruch 1, wobei der Formkörper (7) derart ausgebildet ist, dass aufgenommenes Wasser (6) über das gesamte Volumen des Formkörpers (7) verteilbar ist.

3. Batterie nach einem der vorhergehenden Ansprüche, wobei der poröse, Feuchtigkeit aufnehmende Werkstoff für Wasser (6) eine Kapillaraszension aufweist.

4. Batterie nach einem der vorhergehenden Ansprüche, wobei der Formkörper (7) aus porösem, Feuchtigkeit aufnehmendem Werkstoff Kapillaren aufweist mit einem mittleren Radius, der einen Wassertransport mittels Kapillaraszension vom im Gehäuseinneren liegenden Ende des Formkörpers (7) zum außerhalb des Gehäuses (2) liegenden Ende des Formkörpers (7) gestattet.

5. Batterie nach einem der vorhergehenden Ansprüche, wobei der poröse, Feuchtigkeit aufnehmende Werkstoff einen Faserstoff, Holz, Kreide, Papier, ein Polymer, Glas und/oder einen Schwamm umfasst oder daraus besteht.

6. Batterie nach einem der vorhergehenden Ansprüche, wobei die Vorrichtung (5) zur Trocknung der im Gehäuseinneren befindlichen Luft eine Vorrichtung (5) zur Kondensationstrocknung umfasst oder daraus besteht, insbesondere eine Kühlfalle.

7. Batterie nach einem der vorhergehenden Ansprüche, wobei der Formkörper (7) auf der außerhalb des Gehäuses (2) liegenden Seite eine Vorrichtung (5) zum Entzug von Feuchtigkeit aus dem Formkörper (7) aufweist, insbesondere ein Heizelement (8).

8. Batterie nach Anspruch 7, wobei die Batterie (1) derart ausgebildet ist, dass die Vorrichtung (5) zum Entzug von Feuchtigkeit aus dem Formkörper (7) durch das Auslösen oder während eines Ladevorgangs der Batterie (1) aktivierbar ist.

9. Batterie nach einem der vorhergehenden Ansprüche, wobei der Formkörper (7) derart angebracht ist, dass der außerhalb des Gehäuses (2) liegende Teil des Formkörpers (7) vor direktem Kontakt mit flüssigem Wasser geschützt ist, während ein Austausch von Wasserdampf zwischen dem Formkörper (7) und der Umgebungsluft gewährleistet ist.

10. Batterie nach Anspruch 9, wobei der außerhalb des Gehäuses (2) liegende Teil des Formkörpers (7) über eine mikroporöse Membran (10) mit der Umgebungsluft in Kontakt steht, bevorzugt über eine Membran enthaltend oder bestehend aus Polytetrafluoroethylene.

11. Kraftfahrzeug enthaltend eine Batterie nach einem der Ansprüche 1 bis 10.

## Claims

1. Battery having a housing, in which at least one battery cell and a device for the drying of air located in the housing inner space are arranged, **characterized in that** the battery (1) has a molded body (7) made from a porous, moisture-absorbing material, which molded body is mounted in such a way that it extends both into the housing inner space (3) and into the space outside the housing (2) and connects these to one another in a moisture-conducting manner, that part of the molded body (7) which is located in the housing inner space (3) being connected to the device (5) for drying the air located in the housing inner space (3), in such a way that collected water (6) can be transferred from the device (5) for air drying to the molded body (7).

2. Battery according to Claim 1, the molded body (7) being designed in such a way that absorbed water (6) can be distributed over the entire volume of the molded body (7).

3. Battery according to either of the preceding claims, the porous, moisture-absorbing material having capillary ascension for water (6).

4. Battery according to one of the preceding claims, the molded body (7) made from porous, moisture-absorbing material having capillaries with a mean radius which allows the transport of water by means of capillary ascension from that end of the molded body (7) which lies inside the housing to that end of the molded body (7) which lies outside the housing (2).

5. Battery according to one of the preceding claims, the porous, moisture-absorbing material comprising a fibrous substance, wood, chalk, paper, a polymer, glass and/or a sponge or being composed thereof.

6. Battery according to one of the preceding claims, the device (5) for drying the air located inside the housing comprising a device (5) for condensation drying or being composed of said device, in particular a cold trap.

7. Battery according to one of the preceding claims, the molded body (7) having, on the side lying outside the housing (2), a device (5) for the extraction of moisture from the molded body (7), in particular a heating element (8).

8. Battery according to Claim 7, the battery (1) being designed in such a way that the device (5) for the extraction of moisture from the molded body (7) can be activated by the triggering of an operation for charging the battery (1) or during said operation.

9. Battery according to one of the preceding claims, the molded body (7) being mounted in such a way that that part of the molded body (7) which lies outside the housing (2) is protected from direct contact with liquid water, while an exchange of water vapor between the molded body (7) and the ambient air is ensured.

10. Battery according to Claim 9, that part of the molded body (7) which lies outside the housing (2) being in contact with the ambient air via a microporous diaphragm (10), preferably via a diaphragm containing or composed of polytetrafluoroethylenes.

11. Motor vehicle containing a battery according to one of Claims 1 to 10.

## Revendications

1. Batterie avec un boîtier, dans lequel sont disposés au moins un élément de batterie et un dispositif destiné au séchage de l'air présent dans l'espace intérieur du boîtier, **caractérisée en ce que** la batterie (1) présente un corps moulé (7) en matériau poreux, absorbant l'humidité, qui est mis en place de telle sorte qu'il s'étend aussi bien dans l'espace intérieur du boîtier (3) que dans l'espace extérieur du boîtier (2) et raccorde ceux-ci l'un à l'autre de façon conductrice de l'humidité, la partie du corps moulé (7) située dans l'espace intérieur du boîtier (3) étant raccordée au dispositif (5) destiné au séchage de l'air présent dans l'espace intérieur du boîtier (3) de telle sorte que l'eau (6) collectée peut être transférée à partir du dispositif (5) destiné au séchage de l'air en direction du corps moulé (7).

2. Batterie selon la revendication 1, le corps moulé (7) étant constitué de telle sorte que l'eau (6) absorbée peut être répartie sur la totalité du volume du corps moulé (7).

3. Batterie selon l'une des revendications précédentes, le matériau poreux absorbant l'humidité présentant pour l'eau (6) un pompage capillaire.

4. Batterie selon l'une des revendications précédentes, le corps moulé (7) en matériau poreux absorbant l'humidité présentant des capillaires avec un rayon moyen qui permet un transport de l'eau au moyen du pompage capillaire à partir de l'extrémité du corps moulé (7) située dans l'intérieur du boîtier vers l'extrémité du corps moulé (7) située à l'extérieur du boîtier (2).

5. Batterie selon l'une des revendications précédentes, le matériau poreux absorbant l'humidité comprenant ou se composant d'une matière fibreuse, de bois, de craie, de papier, d'un polymère, de verre et/ou d'une éponge.

6. Batterie selon l'une des revendications précédentes, le dispositif (5) destiné au séchage de l'air présent dans l'espace intérieur du boîtier comprenant ou se composant d'un dispositif (5) destiné au séchage par condensation, en particulier un piège cryogénique.

7. Batterie selon l'une des revendications précédentes, le corps moulé (7) présentant, sur le côté situé à l'extérieur du boîtier (2), un dispositif (5) destiné à extraire l'humidité à partir du corps moulé (7), en particulier un élément chauffant (8).

8. Batterie selon la revendication 7, la batterie (1) étant constituée de telle sorte que le dispositif (5) destiné à l'extraction de l'humidité à partir du corps moulé (7) peut être activé par le déclenchement, ou pendant un processus de charge, de la batterie (1).

9. Batterie selon l'une des revendications précédentes, le corps moulé (7) étant mis en place de telle sorte que la partie du corps moulé (7) située à l'extérieur du boîtier (2) est protégée d'un contact direct avec de l'eau liquide tandis qu'un échange de vapeur d'eau entre le corps moulé (7) et l'air ambiant est garanti.

10. Batterie selon la revendication 9, la partie du corps moulé (7) située à l'extérieur du boîtier (2) étant en contact avec l'air ambiant par le biais d'une membrane (10) microporeuse, de préférence par le biais d'une membrane contenant ou étant composée de polytétrafluoroéthylène.

11. Véhicule automobile, contenant une batterie selon l'une des revendications 1 à 10.
